(19) Europäisches Patentamt

European Patent Office

Office européen des brevets

(11) EP 0 984 871 B1

(12) **EUROPÄISCHE PATENTSCHRIFT**

(45) Veröffentlichungstag und Bekanntmachung des Hinweises auf die Patenterteilung:
**31.07.2002 Patentblatt 2002/31**

(21) Anmeldenummer: **98936296.7**

(22) Anmeldetag: **29.05.1998**

(51) Int Cl.[7]: **B60K 41/00**, B60L 11/12

(86) Internationale Anmeldenummer:
**PCT/EP98/03211**

(87) Internationale Veröffentlichungsnummer:
**WO 98/54022 (03.12.1998 Gazette 1998/48)**

(54) **ANTRIEBSSYSTEM FÜR EIN KRAFTFAHRZEUG UND VERFAHREN ZUM BETREIBEN DESSELBEN**

DRIVE SYSTEM FOR AN AUTOMOBILE AND METHOD FOR OPERATING THE SAME

SYSTEME D'ENTRAINEMENT POUR VEHICULE A MOTEUR, ET PROCEDE PERMETTANT DE LE FAIRE FONCTIONNER

(84) Benannte Vertragsstaaten:
**DE FR GB IT**

(30) Priorität: **30.05.1997 DE 19722808**

(43) Veröffentlichungstag der Anmeldung:
**15.03.2000 Patentblatt 2000/11**

(73) Patentinhaber: **Continental ISAD Electronic Systems GmbH & Co. oHG**
**86899 Landsberg/Lech (DE)**

(72) Erfinder: **PELS, Thomas**
**D 77855 Achern (DE)**

(74) Vertreter:
**Lippich, Wolfgang, Dipl.-Pys., Dr.rer.nat. et al**
**Patentanwalt Samson & Partner,**
**Widenmayerstrasse 5**
**80538 München (DE)**

(56) Entgegenhaltungen:
**EP-A- 0 759 370     DE-A- 4 344 053**
**DE-A- 19 505 431     DE-C- 4 217 668**

- **BUMBY J R ET AL: "OPTIMISATION AND CONTROL OF A HYBRID ELECTRIC CAR" IEE PROCEEDINGS D. CONTROL THEORY & APPLICATIONS, Bd. 134, Nr. 6, November 1987, Seiten 373-387, XP002025377**
- **Kraftfahrtechnisches Taschenbuch / Bosch; VDI-Verlag, Düsseldorf (DE), 21. Auflage 1991, Seiten 322-323 und 550-551**

**Beschreibung**

Die Erfindung betrifft ein Antriebssystem, insbesondere für ein Kraftfahrzeug, sowie ein Verfahren zum Betreiben eines solchen Antriebssystems.

Heutige Verbrennungsmotoren sind in der Regel mit Verbrennungsmotoren ausgerüstet, die über relativ hohe Leistungsreserven verfügen. Dies hat zur Folge, daß die Motoren den größten Teil ihrer Betriebszeit mit relativ niedrigem Drehmoment oder - anders ausgedrückt - mit relativ niedrigem effektiven Mitteldruck laufen. Der relative Verbrauch (d.h. der auf die Motordrehzahl.normierte Verbrauch) hat jedoch i.a. sein globales Optimum bei einem relativ hohen effektiven Mitteldruck und zeigt dabei über ein relativ breites Band mittlerer Drehzahlen nur eine relativ geringe Abhängigkeit von der Motordrehzahl.

Es ist bekannt, daß niedertouriges Fahren in einem höheren Gang in der Regel zu einer Erniedrigung des Kraftstoffverbrauchs führt. Der Grund hierfür ist, daß bei niedrigerer Motordrehzahl, aber konstanter Motorleistung das abgegebene Drehmoment und damit der relative effektive Mitteldruck in der Regel größer ist, was den Betriebspunkt in günstigere Verbrauchskennfeldbereiche verschiebt (vergleiche z.B. Kraftfahrtechnisches Taschenbuch/Bosch, 21. Auflage, 1991, Seiten 322/323). Genauso kann bei automatischen Schaltgetrieben durch Wahl der Schaltpunkte bei niedrigen Drehzahlen der Verbrauch i.a. günstig beeinflußt werden.

Mit stufenlosen Getrieben (sog. CVT-Getrieben, engl. "Continuous Velocity Transmission") oder fein abgestuften Getrieben läßt sich dieser Grundgedanke wirksamer anwenden. Und zwar erlaubt die Möglichkeit der (quasi)-kontinuierlichen Verstellung der Übersetzung, den Betriebspunkt so zu wählen, daß der Verbrauch für die jeweilige Motorleistung minimal wird (vergleiche z.B. Kraftfahrtechnisches Taschenbuch, a. a.O., Seite 550/551). In der Praxis existieren allerdings oft Randbedingungen, die den Spielraum möglicher Übersetzungswerte begrenzen und daher streng genommen ein Erreichen des bei jeweiliger Leistung theoretisch möglichen Verbrauchsminimums nicht erlauben. Die Verbrauchsoptimierung besteht dann darin, den Betriebspunkt innerhalb des Spielraums möglicher Übersetzungswerte so zu wählen, daß das praktisch mögliche Verbrauchsminimum erzielt wird. Eine derartige Randbedingung kann z.B. eine vom Getriebe konstruktiv vorgegebene Übersetzungsgrenze sein, etwa wenn bei kleiner geforderter Leistung ein bei einem Getriebe oft nicht vorhandene "Schnellgangübersetzung" (d.h. Übersetzungsverhältnis kleiner eins) zur Erreichung des theoretischen Verbrauchsminimums notwendig wäre. Eine weitere derartige Randbedingung kann darin liegen, daß auch bei einem stufenlosen (oder fein abgestuften) Getriebe ein gewisser Beschleunigungsüberschuß gewünscht sein kann. Darunter versteht man den Abstand des beim Betriebspunkt vorliegenden Drehmoments zum maximalen Drehmoment.

Ein weiterer Vorschlag zur Verschiebung des Betriebspunkts möglichst nahe zum globalen Verbrauchsoptimum - hier bei einem Hybridfahrzeug - ist aus der DE 43 44 053 A1 bekannt. Der Lösungsgedanke beruht dort nicht darauf, bei konstant gehaltener Leistung das Drehmoment durch Erniedrigung der Drehzahl zu erhöhen, sondern durch Erhöhung der dem Verbrennungsmotor abgeforderten Leistung. Die zum Antrieb des Fahrzeugs nicht benötigte Überschußleistung wird durch einen vom Verbrennungsmotor angetriebenen Generator in elektrische Energie umgewandelt und in einem elektrochemischen Energiespeicher gespeichert. Die gespeicherte Energie wird beim elektrischen Antrieb des Fahrzeugs wieder verwendet.

Aus der DE 195 05 431 A1, deren Merkmale denjenigen des Oberbegriffs der unabhängigen Ansprüche entspricht, ist es bekannt, bei einem Hybridfahrzeug den Gesamtwirkungsgrad zu optimieren, welcher durch ein Produkt des Verbrennungsmotor-, Generator- und Batteriewirkungsgrads berechnet wird. In der Druckschrift ist erwähnt, daß als sog. "wirkungsgradbeeinflussender Parameter" auch eine Drehzahleinstellung mit Hilfe eines CVT-Getriebes möglich ist.

Der vorliegenden Erfindung liegt die Aufgabe zugrunde, ein weiteres Antriebssystem anzugeben, mit dem ein niedriger Kraftstoffverbrauch erzielt werden kann. Dazu gehört auch die Bereitstellung eines entsprechenden Verfahrens.

Die Aufgabe ist mit den Merkmalen des Anspruchs 1 bzw. 9 gelöst.

Weitere Ausgestaltungen der Erfindung sind in den Unteransprüchen enthalten.

Die Erfinder der vorliegenden Erfindung haben erkannt, daß bei modernen, wie herkömmlich direkt durch Verbrennungsmotor angetriebenen Kraftfahrzeugen, die Leistungsaufnahme von mitlaufenden Nebenaggregaten (insbesondere des Generators) relativ zur Antriebsleistung in vielen Betriebszuständen (z.B. im Stadtverkehr) nennenswert groß ist. Ausgehend hiervon lehrt die Erfindung, zur Erzielung eines möglichst hohen Wirkungsgrades einen Gesamtwirkungsgrad zu optimieren, in den die Einzelwirkungsgrade des Fahrzeugantriebs und mitlaufender Nebenaggregate mit einem Gewicht, das deren Leistungsanteil entspricht, eingehen.

Im einzelnen stellt die Erfindung gemäß Anspruch 1 ein Antriebssystem, insbesondere für ein Kraftfahrzeug bereit, welches folgendes umfaßt: ein Antriebsaggregat, insbesondere ein Verbrennungsmotor, ein Getriebe mit veränderbarer Übersetzung zwischen Antriebsaggregat und Antrieb, und zwar insbesondere mit stufenlos oder feinabgestuft veränderbarer Übersetzung, wenigstens ein, vom Antriebsaggregat angetriebenen Nebenaggregat, insbesondere einen elektrischen Generator, eine Steuerung, welche die Übersetzung innerhalb eines Spielraums möglicher Übersetzungswerte so wählt, daß unter gemeinsamer Berücksichtigung der Einzelwirkungsgradfunktionen des Fahrzeugantriebs und des/der Nebenaggregats/e samt deren Antrieb ein möglichst großer Gesamtwirkungsgrad erzielt wird, wobei die Einzelwirkungsgradfunktionen mit einem Gewicht entsprechend dem Leistungsanteil des Fahrzeugantriebs bzw. des/der Nebenaggregats/e in den Gesamtwirkungsgrad eingehen. Das Getriebe kann auch ein Automatikgetriebe oder ein automatisiertes Schaltgetriebe sein. Unter Einzelwirkungsgradfunktion wird der Wirkungsgrad des Fahrzeugantriebs (gebildet durch Verbrennungsmotor und Antriebsstrang) oder eines Nebenaggregatantriebs (gebildet durch Verbrennungsmotor und Nebenaggregat) als Funktion z.B. der Drehzahl oder einer damit verbundenen Größe) verstanden.

Ein entsprechendes Verfahren ist in Anspruch 10 angegeben.

In den Unteransprüchen sind vorteilhafte Ausgestaltungen angegeben. Gemäß Anspruch 2 sind Verbrennungsmotor und Nebenaggregat mit festem Drehzahlverhältnis miteinander gekoppelt. Bei einer alternativen Ausgestaltung gemäß Anspruch 8 ist das Drehzahlverhältnis zwischen Verbrennungsmotor und Nebenaggregat hingegen veränderbar. Dieser zusätzliche Freiheitsgrad erlaubt einerseits eine noch weitergehende Wirkungsgradoptimierung, bedingt aber andererseits einen baulichen Zusatzaufwand.

Zurückkommend auf das vorteilhafte feste Drehzahlverhältnis, hat dieses gemäß Anspruch 3 besonders vorteilhaft den Wert eins. Das Hilfsaggregat dreht dann mit der gleichen Drehzahl wie der Verbrennungsmotor. Dies ist beispielsweise der Fall bei einem besonders vorteilhaften Ein-Wellen-Aggregat, bei dem z.B. der Läufer des Generators direkt auf der Antriebswelle des Verbrennungsmotors sitzt und mit dieser - fest gekoppelt oder koppelbar - dreht.

Gemäß Anspruch 4 wird der Gesamtwirkungsgrad als leistungsgewichtete Summe der Einzelwirkungsgradfunktionen bestimmt, wobei diese wiederum jeweils als Produkt der Wirkungsgrade der in Serie geschalteten Elemente, also von Verbrennungsmotor und Antriebsstrang bzw. Verbrennungsmotor und Nebenaggregat bestimmt werden. Bei einer vorteilhaften Ausgestaltung gemäß Anspruch 5 sind die Relativgewichte der Einzelwirkungsgradfunktionen - jeweils bezogen auf eine bestimmte Drehzahl des Verbrennungsmotors - fest; und zwar werden sie (als Funktion der Drehzahl) in Abhängigkeit von den mittleren, im Betrieb auftretenden Relativleistungen von Antrieb und Nebenaggregat/ en bei der jeweiligen Drehzahl gewählt, z.B. proportional zu den mittleren Relativleistungen bei der jeweiligen Drehzahl. Besonders vorteilhaft ist eine andere Ausgestaltung gemäß Anspruch 6, bei der die Relativgewichte der Einzelwirkungsgradfunktionen nicht fest, sondern - zusätzlich zu der oben angesprochenen möglichen Abhängigkeit von der Drehzahl - variabel sind. Und zwar werden die variablen Relativgewichte der Einzelwirkungsgradfunktionen in Abhängigkeit von den momentanen Relativleistungen von Antrieb und Hilfsaggregat/en gewählt, z.B. proportional zu den momentanen Relativleistungen.

Wie oben erwähnt zeigen die Einzelwirkungsgradfunktionen von Verbrennungsmotor und Nebenaggregat/en bei konstanter Leistung i.a. eine unterschiedliche Drehzahlabhängigkeit. Würde man die Einzelwirkungsgradfunktionen jeweils nur für sich betrachtet optimieren, so erhielte man daher die Optima der Einzelwirkungsgrade bei verschiedenen Drehzahlen. Die Optimierung des Gesamtwirkungsgrads bei festem Drehzahlverhältnis führt dann in der Regel zu dem Ergebnis, daß die Drehzahl, bei welcher der Gesamtwirkungsgrad optimal wird, zwischen den Drehzahlwerten der Einzelwirkungsgradoptima liegt (Anspruch 7). Je größer das Gewicht einer Einzelwirkungsgradfunktion ist, umso näher liegt die Drehzahl des Gesamtwirkungsgradoptimums bei der Drehzahl des Optimums dieser Einzelwirkungsgradfunktion.

Ändert man die Drehzahl, führt dies i.a. wegen der dann geänderten Einzelwirkungsgrade zu einer Änderung der Gesamtleistung. Gemäß Anspruch 9 wird deshalb vorteilhaft die sich beim Optimieren des Gesamtwirkungsgrads ergebende Änderung der Gesamtleistung durch iteratives Annähern an den optimalen Gesamtwirkungsgrad und die gewünschte Gesamtleistung berücksichtigt. Die Gesamtleistung wird durch Änderung der Drehzahl auf den gewünschten Wert gebracht, und dann wiederum die Drehzahl entsprechend dem optimalen Gesamtwirkungsgrad eingestellt, und so fort.

Die obigen Ausführungen zu den Anspruchsgegenständen beziehen sich gleichermaßen auf Ausgestaltungen des erfindungsgemäßen Antriebssystems wie des erfindungsgemäßen Verfahrens.

Die Erfindung wird nun durch Ausführungsbeispiele sowie die angefügte Zeichnung näher erläutert. In der Zeichnung zeigen:

FIG. 1    eine schematische Darstellung eines Antriebssystems eines Kraftfahrzeugs;

FIG. 2    ein beispielhaftes Wirkungsgradkennfeld eines Verbrennungsmotors;

FIG. 3    ein beispielhaftes Wirkungsgradkennfeld eines Generators;

FIG. 4    eine schematische Darstellung der funktionalen Abhängigkeit verschiedener Wirkungsgrade von der Drehzahl bei einer bestimmten Leistungsaufteilung; und

FIG. 5    ein schematisches Ablaufdiagramm eines Verfahrens zum Betreiben des Antriebssystems von Fig. 1.

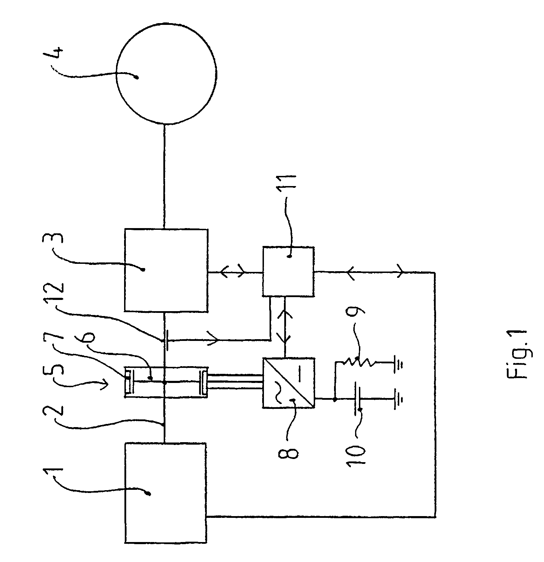

Ein Antriebssystem eines Kraftfahrzeugs, z.B. eines Personenkraftwagens, gemäß FIG. 1 weist einen Verbrennungsmotor 1 auf, der Drehmoment über eine Antriebswelle 2 (z.B. die Kurbelwelle des Verbrennungsmotors 1), ein CVT-Getriebe 3 (d.h. ein Getriebe mit kontinuierlich veränderbarer Übersetzung) und ggf.

weitere (nicht gezeigte) Teile eines Antriebsstrangs auf Antriebsräder 4 des Fahrzeugs abgibt. Das CVT-Getriebe 3 ist beispielsweise ein Schubgliederkettengetriebe oder ein sonstiges Zugmittelgetriebe, wie etwa ein Riemengetriebe. Die kontinuierliche Übersetzungsveränderung kann beispielsweise durch Axialverschiebung der Kette bzw. des sonstigen Zugmittels auf zwei gegenläufig konisch ausgebildeten Scheiben erfolgen. Bei anderen Ausführungsformen ist die Übersetzung des CVT-Getriebes nicht stufenlos, sondern in feinen Abstufungen veränderbar. Eine (nicht dargestellte) Kupplung kann z.B. als gesondertes Bauteil zwischen Verbrennungsmotor 1 und CVT-Getriebe 3 vorgesehen oder in letzteres integriert sein.

Ein Nebenaggregat, hier in Form eines elektrischen Generators 5 wird vom Verbrennungsmotor 1 angetrieben. Bei dem gezeigten Ausführungsbeispiel handelt es sich um eine elektrische Maschine, deren Läufer 6 auf der Antriebswelle 2 zwischen Verbrennungsmotor 1 und CVT-Getriebe 3 sitzt und drehfest mit ihr gekoppelt oder koppelbar ist. Das Drehzahlverhältnis zwischen Verbrennungsmotor 1 und Generator 5 ist fest, und zwar hat es - da der Läufer 6 zusammen mit der Antriebswelle 2 (hier der Kurbelwelle des Verbrennungsmotors 1) dreht - den Wert 1. Bei anderen (nicht gezeigten) Ausführungsformen ist der Generator 5 nicht in dem durchgehenden Antriebsstrang, sondern z.B. in einem parallelen Antriebsast angeordnet, was die Zwischenschaltung eines Getriebes mit fester oder veränderbarer Übersetzung - und insbesondere eines (weiteren) stufenlos oder fein abgestuft veränderbaren Getriebes - erlaubt. Neben dem Generator 5 können weitere (elektrische und/oder mechanische) Nebenaggregate vorgesehen sein.

Bei dem Generator 5 kann es sich beispielsweise um einen üblichen Drehstromgenerator mit nachgeschalteter Gleichrichtereinheit handeln. Vorteilhaft wird er jedoch durch eine wechselrichter-gesteuerte Drehstrommaschine gebildet, die sowohl motorisch als auch generatorisch betreibbar ist. Eine solche Maschine kann neben den bremsenden Funktionen, wie Generatorwirkung oder elektrische Fahrzeugbremse, auch antreibende Funktionen, etwa zum Starten des Verbrennungsmotors und zu seiner Unterstützung bei der Fahrzeugbeschleunigung übernehmen. Ferner ist mit einer solchen Maschine eine Betriebsart mit schnell alternierend bremsenden und antreibenden Momenten möglich, mit denen Drehungleichförmigkeiten des Verbrennungsmotors gedämpft werden. Die z.B. als Asynchron-Drehstrommaschine ausgebildete Maschine 5 erzeugt Drehmomente zwischen dem Läufer 6 sowie einem z.B. am Gehäuse des Verbrennungsmotors 1 abgestützten Ständer 7. Die Speisung der (nicht dargestellten) Wicklung des Ständers 7 erfolgt durch einen Wechselrichter 8 mit elektrischen Strömen und Spannungen praktisch frei einstellbarer Amplitude, Phase und Frequenz. Die motorische Betriebsart der elektrischen Maschine 5 unterscheidet sich von der generatorischen im wesentlichen durch das Vorzeichen des Schlupfes zwischen dem magnetischen Drehfeld und dem Läufer 6, welches im ersten Fall positiv und im zweiten negativ ist.

Bei dem Wechselrichter 8 handelt es sich z.B. um einen Gleichspannungs-Zwischenkreis-Wechselrichter, welcher aus einer im wesentlichen konstanten Zwischenkreis-Gleichspannung mit Hilfe von elektronischen Schaltern z.B. sinusbewertete breitenmodulierte Pulse herausschneidet, die - gemittelt durch die Induktivität der elektrischen Maschine 5 - zu nahezu sinusförmigen Strömen der gewünschten Frequenz, Amplitude und Phase führen, bzw. welcher entsprechend Wechselströme in gleichstromartige Ströme umsetzt. Im Generatorbetrieb gibt die elektrische Maschine 5 über den Wechselrichter 8 elektrische Energie an ein Fahrzeugbordnetz ab, welches elektrische Verbraucher 9 sowie eine Bordnetzbatterie 10 aufweist. Letztere ist als Starterbatterie ausgelegt, sie kann also die üblicherweise zum Starten benötigten Energien und Leistungen über den Wechselrichter 8 an die elektrische Maschine 5 liefern. Bei anderen Ausführungsformen ist die Batterie in der Lage, größere Energiemengen bzw. Leistungen zu speichern und abzugeben.

Ein Steuergerät 11 dient zur Steuerung des CVT-Getriebes 3 sowie - bei der dargestellten Ausführungsform - des Generators 5 (über den Wechselrichter 8) und des Verbrennungsmotors 1. Bei anderen (nicht gezeigten) Ausführungsformen sind für diese verschiedenen Funktionen gesonderte, miteinander kommunizierende Steuergeräte vorgesehen. Das Steuergerät 11 gibt dem CVT-Getriebe 3 in jedem Betriebszustand vor, welches Übersetzungsverhältnis dieses einzustellen hat. Als Eingangsinformation empfängt das Steuergerät 11 hierzu u.a. die momentane Drehzahl des Verbrennungsmotors 1 (z.B. mit Hilfe einer Drehzahlmeßeinrichtung 12), die momentan vom Verbrennungsmotor 1 erbrachte Leistung und/oder das von ihm erbrachte Drehmoment, (z.B. anhand der momentanen Drosselklappeneinstellung, der Kraftstoffeinspritzmenge und/oder des direkt gemessenen Drehmoments, z.B. mit Hilfe einer in der Antriebswelle 2 liegenden Drehmomentnabe), und die momentane Generatorleistung (z.B. anhand entsprechender elektrischer Kenngrößen, wie z. B. gemittelte Ströme und Spannungen des Wechselrichters 8). Wie unten noch näher erläutert wird, bestimmt das Steuergerät 11 anhand dieser Informationen dasjenige Übersetzungsverhältnis, welches den gemeinsamen Wirkungsgrad von Verbrennungsmotor 1 und Generator 5 möglichst groß macht. Zur Durchführung dieser sowie der weiteren umfangreichen Steueraufgaben ist es mit einem Hochleistungsprozessor ausgerüstet, daneben mit Speichern, welche u.a. zur dauerhaften Speicherung umfangreicher Kennfelder ausgelegt sind.

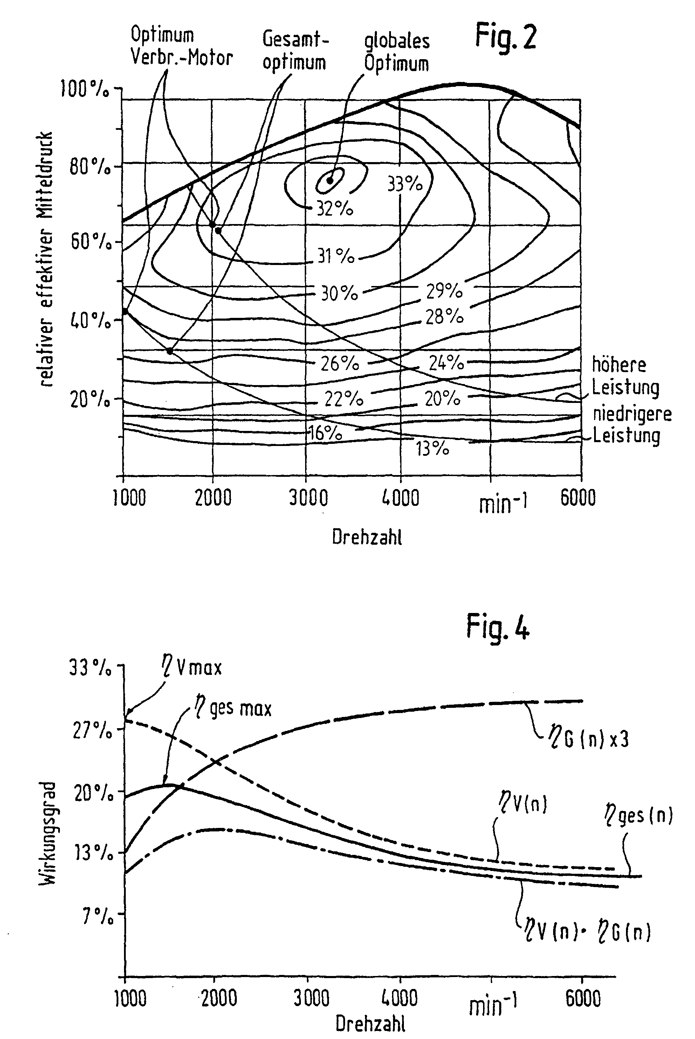

FIG. 2 zeigt beispielhaft ein Wirkungsgradkennfeld eines Verbrennungsmotors. Gezeigt sind Linien gleichen Wirkungsgrads $\eta_V$ als Funktion des relativen effektiven Mitteldrucks und der Drehzahl. Der Wirkungsgrad $\eta_V$ ist definiert als das Verhältnis der am Verbrennungsmotor nach außen abgegebenen Arbeit zum mechanischen Arbeitsäquivalent des zugeführten Kraftstoffs. Die weiter unten eingeführte Einzelwirkungsgradfunktion des Antriebs ist das Produkt am Verbrennungsmotorwirkungsgrad und Wirkungsgrad des Antriebsstrangs, $\eta_V\eta_A$. Im Kennfeld gemäß FIG. 2 liegt der größte Verbrennungsmotor-Wirkungsgrad $\eta_V$ global bei einem relativen effektiven Mitteldruck (im folgenden kurz "Mitteldruck" genannt) von ungefähr 75% und einer Drehzahl von ungefähr 3300 $\text{min}^{-1}$. Von dort fällt der Wirkungsgrad nach allen Seiten hin ab. Anschaulich gesprochen hat das Kennfeld die Form eines Gebirges; die Linien gleichen Wirkungsgrads stellen in diesem Bild Höhenlinien dar. Der Mitteldruck ist dem vom Verbrennungsmotor abgegebenen Drehmoment proportional. In dem Kennfeld sind beispielhaft zwei Kurven konstanter Leistung eingezeichnet, von denen eine mit "höherer Leistung" und die andere mit "niedrigerer Leistung" gekennzeichnet ist. Es handelt sich hierbei um Hyperbeln. Anschaulich gesprochen sind diese Kurven Pfade an dem Hang des Gebirges. Der höchste Punkt, den ein solcher Pfad einnimmt, stellt das Wirkungsgradoptimum des Verbrennungsmotors bei der gegebenen Leistung dar. Für die Hyperbel "höhere Leistung" liegt dieses Optimum bei einer Drehzahl von ungefähr 2000 $\text{min}^{-1}$. Der relative Wirkungsgrad beträgt dort ungefähr 31%. Bei der Hyperbel "niedrigere Leistung" liegt das Verbrauchsoptimum bei einer Drehzahl von 1000 $\text{min}^{-1}$; es beträgt dort ungefähr 28%. Wie man FIG. 2 entnehmen kann, wäre bei der letztgenannten Hyperbel theoretisch bei niedrigerer Drehzahl ein noch höherer relativer Wirkungsgrad (etwa 29%) erzielbar. Die Drehzahl von 1000 $\text{min}^{-1}$ ist jedoch bei dem dargestellten Beispiel die untere Drehzahlgrenze, um einen sicheren Rundlauf des Verbrennungsmotors zu gewährleisten. Bei dem eingangs erwähnten, im Stand der Technik bekannten Antriebssystem mit CVT-Getriebe wird dessen Übersetzung so gewählt, daß der relative Wirkungsgrad des Verbrennungsmotors maximal ist. Das heißt, im Fall der Hyperbel "höhere Leistung" würde im Stand der Technik die Übersetzung so gewählt werden, daß der Verbrennungsmotor bei einer Drehzahl von 2000 $\text{min}^{-1}$ läuft, bei der Hyperbel "niedrigerer Leistung" bei einer Drehzahl von 1000 $\text{min}^{-1}$.

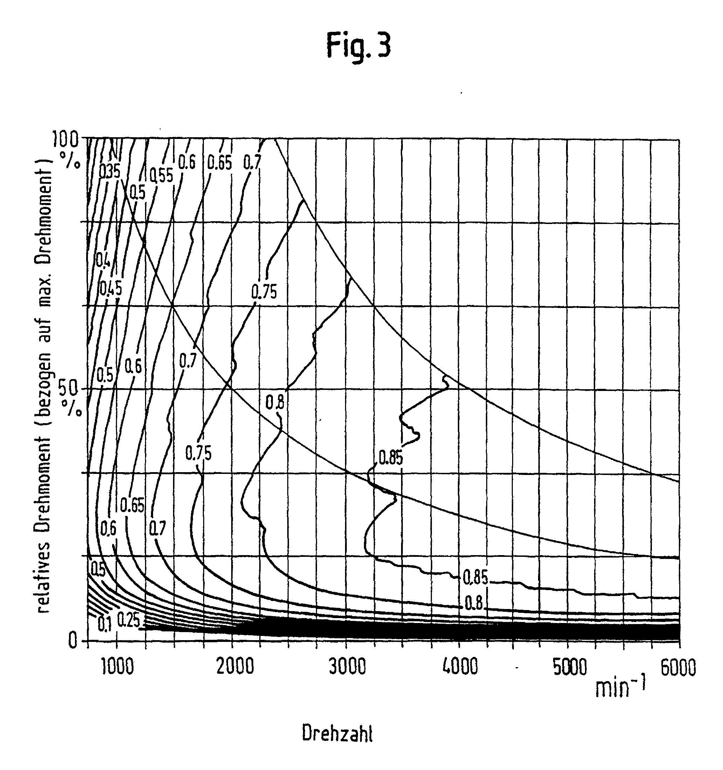

Bei dem der Veranschaulichung der Erfindung dienenden vorliegenden Beispiel werden hingegen das oder die Nebenaggregate in die Wirkungsgradoptimierung einbezogen, hier der Generator 5. Dies führt insbesondere bei niedrigen Verbrennungsmotorleistungen zu einer deutlichen Verschiebung des Betriebspunktes und einer Steigerung des Gesamtwirkungsgrads gegenüber der herkömmlichen Optimierung. Hierzu sei zunächst das beispielhafte Wirkungsgradkennfeld des Generators 5 gemäß FIG. 3 gezeigt. Ähnlich FIG. 2 sind hier Linien gleichen Wirkungsgrads als Funktion des relativen maximalen Moments des Generators und der Drehzahl dargestellt. Der "Wirkungsgrad" $\eta_G$ des Generators ist definiert als das Verhältnis der vom Generator gelieferten elektrischen Energie zu dem zu seinem Antrieb benötigten mechanischen Energieäquivalent (d.h. der Arbeit). Das Kennfeld des Generators 5 hat - anschaulich gesprochen - die Form eines Hochplateaus, welches zu kleinen Drehzahlen und kleinen Drehmomenten hin steil abfällt. Eingezeichnet in FIG. 3 ist eine Kurve (Hyperbel) konstanter Generatorleistung.

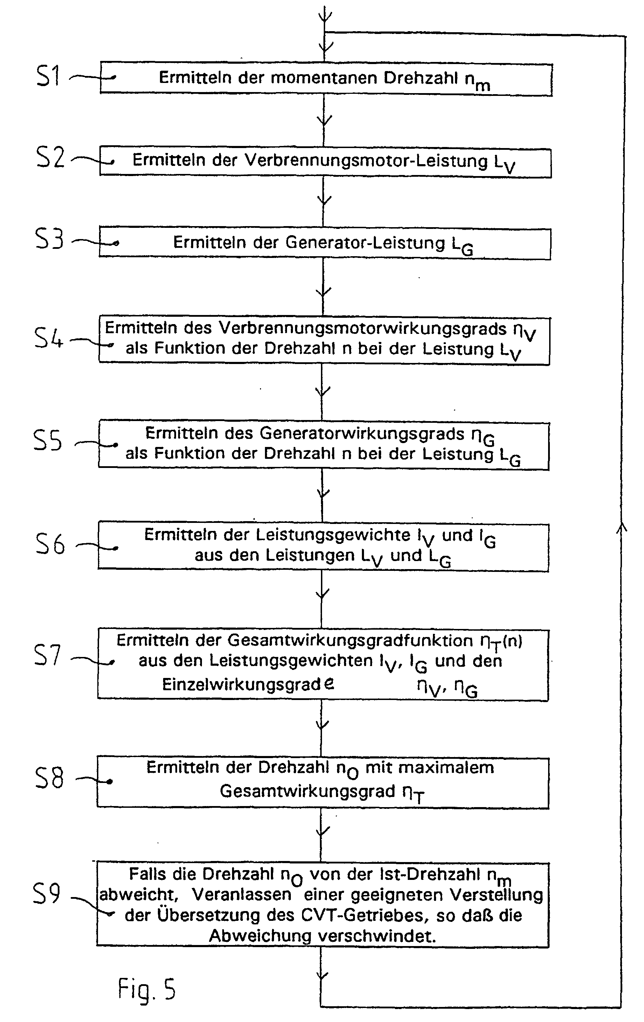

In FIG. 4 sind die Kurve "niedrigere Leistung" aus dem Verbrennungsmotorkennfeld gemäß FIG. 2 sowie die Leistungskurve aus dem Generatorkennfeld gemäß FIG. 3 gemeinsam als Funktion der Drehzahl dargestellt (um den zahlenmäßig größeren Generatorwirkungsgrad $\eta_G$ im gleichen Diagramm einzeichnen zu können, sind die $\eta_G$-Werte auf ein Drittel verringert dargestellt). Der Verbrennungsmotorwirkungsgrad $\eta_V$ hat - wie oben erläutert - sein Maximum bei niedriger Drehzahl und fällt zu höheren Drehzahlen hin ab. Der Generatorwirkungsgrad $\eta_G$ hingegen hat bei niedriger Drehzahl sein Minimum und steigt zu höheren Drehzahlen hin an. Die Einzelwirkungsgradfunktion des Fahrzeugantriebs wird im folgenden zunächst näherungsweise dem Verbrennungsmotorwirkungsgrad $\eta_V(n)$ gleichgesetzt, da der Wirkungsgrad des Antriebsstrangs $\eta_A$ relativ nahe bei 1 liegt. Die Einzelwirkungsgradfunktion für Stromerzeugung durch den Generator ist das Produkt aus Verbrennungsmotor- und Generatorwirkungsgrad $\eta_V(n)\eta_G(n)$, da Verbrennungsmotor und Generator - für die Stromerzeugung - in Serie geschaltet sind. Die Generator-Einzelwirkungsgradfunktion ist ebenfalls in Fig. 4 eingezeichnet. Die Optimierung des Gesamtwirkungsgrads $\eta_{ges}$ läßt sich durch eine leistungsgewichtete Addition der Einzelwirkungsgradfunktionen von Antrieb und Stromerzeugung und anschließender Bestimmung des Maximums der so erhaltenen Gesamtwirkungsgradfunktion veranschaulichen: Zunächst werden die Wirkungsgradgewichte $I_A$ und $I_E$ des Antriebs bzw. der Stromerzeugung bestimmt, man erhält sie beispielsweise in einer Näherung aus den Relativleistungen $L_A$ und $L_E$, die der Verbrennungsmotor 1 für den Antrieb bzw. die Stromerzeugung erbringt:

$$I_A = L_A/(L_A+L_E),$$

und

$$I_E = L_E/(L_A+L_E).$$

Die Summe der Gewichte ist Eins.

In einem einfachen Beispiel beträgt die Leistung des Verbrennungsmotors für den Antrieb 5 kW und für den Generator 5 kW. Das heißt, die vom Verbrennungsmotor erbrachte Leistung teilt sich ungefähr zu gleichen Teilen in Fahrzeugantriebsleistung und Generatorantriebsleistung auf, was bei dem Betrieb eines modernen Kraftfahrzeugs z.B. im Stadtverkehr häufig vorkommt. Das heißt:

$$I_A = 1/2,$$

und

$$I_E = 1/2.$$

Der in FIG. 4 ebenfalls eingezeichnete Gesamtwirkungsgrad $\eta_{ges}$ als Funktion der Drehzahl n ergibt sich als Summe der leistungsgewichteten Einzelwirkungsgradfunktionen:

$$\eta_{ges}(n) = I_A\eta_V(n) + I_E\eta_V(n)\eta_G(n).$$

Der optimale Gesamtwirkungsgrad - welcher vom Steuergerät 11 durch Wahl eines entsprechenden Übersetzungsverhältnisses des CVT-Getriebes 3 gewählt wird - liegt im Maximum der Gesamtwirkungsgradfunktion $\eta_{ges}(n)$. Das Gesamtwirkungsgradoptimum ist in FIG. 4 eingezeichnet; es liegt am Ort verschwindender Steigung des Gesamtwirkungsgrads oder - analytisch ausgedrückt - bei derjenigen Drehzahl, bei der die erste Ableitung der Gesamtwirkungsgradfunktion nach der Drehzahl gleich, und die zweite Ableitung kleiner Null ist:

$$\eta_{gesmax} = \eta_{gex}(n_0),$$

wobei $n_0$ diejenige Drehzahl ist, für die gilt:

$$d\eta_{ges}/dn = 0$$

sowie

$$d^2\eta_{ges}/dn^2 < 0.$$

Werden diese Bedingungen von mehreren Gesamtwirkungsgraden erfüllt (lokale Gesamtwirkungsgradoptima), so ist der optimale Gesamtwirkungsgrad das maximale lokale Optimum.

Bei dem in FIG. 4 dargestellten Beispiel liegt der optimale Gesamtwirkungsgrad bei einer Drehzahl von ca. 1500 min$^{-1}$; er beträgt ungefähr 20%. Bei der im Stand der Technik bekannten Verbrauchsoptimierung des Verbrennungsmotors würde hingegen - wie oben erwähnt - eine als optimal angesehene Drehzahl von 1000 min$^{-1}$ gewählt, bei welcher der Gesamtwirkungsgrad nur ungefähr 19% beträgt. Die erfindungsgemäße Optimierung des Gesamtwirkungsgrads bringt also im vorliegenden Beispiel eine relative Wirkungsgradverbesserung um ca. 5%. Die deutliche Verschiebung des Betriebspunktes bei Optimierung des Gesamtwirkungsgrads gegenüber der herkömmlichen Optimierung ist in FIG. 2 eingezeichnet. Bei der Kurve "niedrigere Leistung" ist diese Betriebspunktverschiebung beträchtlich, bei der Kurve "höhere Leistung" fällt sie hingegen - wie man FIG. 2 entnimmt - weniger ins Gewicht. Gründe hierfür sind einerseits das geringere Gewicht des Generatorwirkungsgrads sowie die Verschiebung des Verbrennungsmotorwirkungsgradmaximums zu größeren Drehzahlen hin (hier z.B. zu 2000 min$^{-1}$).

Mehrere Aspekte seien noch angemerkt:

i) eine Verallgemeinerung auf mehrere Nebenaggregate ergibt sich auf einfache Weise, indem diese mit entsprechenden Gewichten in den Gesamtwirkungsgrad einbezogen werden. Zum Beispiel sei angenommen, daß der Verbrennungsmotor neben dem Generator als weiteres Nebenaggregat einen Klimakompressor mechanisch antreibt. Dieser Klimakompressor hat den Wirkungsgrad $\eta_K(n)$, und das Leistungsgewicht $I_K$. Da Verbrennungsmotor und Klimakrompressor - was den Klimakompressorantrieb betrifft - in Serie geschaltet sind, lautet die Einzelwirkungsgradfunktion des Klimakompressorantriebs $I_K\eta_V(n)\eta_K(n)$. Der Gesamtwirkungsgrad $\eta_{ges}$ als Funktion der Drehzahl n ergibt sich als Summe der leistungsgewichteten Einzelwirkungsgradfunktionen:

$$\eta_{ges}(n) = I_A\eta_V(n) + I_E\eta_V(n)\eta_G(n) + I_K\eta_V(n)\eta_K(n).$$

Die Verallgemeinerung auf weitere oder andere Nebenaggregate erfolgt entsprechend durch Summenbildung der in entsprechender Weise gebildeten Einzelwirkungsgradfunktionen.

ii) Die oben an mehreren Stellen angegebene Einzelwirkungsgradfunktion des Fahrzeugantriebs beruht auf der Näherung, daß allein der Verbrennungsmotorwirkungsgrad $\eta_V$ für sie bestimmend ist. Genaugenommen muß jedoch auch der Wirkungsgrad $\eta_A$ des die Verbrennungsmotorleistung übertragenden Antriebsstrangs berücksichtigt werden. Die entsprechende genaue Einzelwirkungsgradfunktion für den Fahrzeugantrieb ist wiederum ein Produkt $\eta_V(n)\eta_A(n)$ da Verbrennungsmotor und Antriebsstrang in Serie geschaltet sind. Der Gesamtwirkungsgrad lautet somit:

$$\eta_{ges}(n) = I_A\eta_V(n)\eta_A(n) + I_E\eta_V(n)\eta_G(n).$$

iii) Für die Bestimmung der Leistungsgewichte dürfen nicht die am Ausgang abgegebenen Leistungen (d.h. die von den Antriebsrädern und vom Generator abgegebenen Leistung), sondern die Aufteilung der Eingangsleistungen (d.h. die Aufteilung des mechanischen Äquivalents des zugeführten Kraftstoffs) zugrundegelegt werden. Da sich der Leistungsfluß aber erst nach dem Verbrennungsmotor aufteilt, erhält man das gleiche Ergebnis, wenn man der Berechnung der Gewichte die Aufteilung der vom Verbrennungsmotor erbrachten Leistung zugrundelegt.

iv) Zum leichteren Verständnis beruht obige Darstellung auf der Annahme, daß die Leistung des Verbrennungsmotors bei der Optimierung konstant bleibt, also sich der Betriebspunkt nur auf einer Leistungshyperbel (wie in FIG. 2 gezeigt) bewegen kann. Genau genommen zieht aber eine Variation des Generatorwirkungsgrads eine Veränderung der Verbrennungsmotorleistung nach sich, denn bei niedrigem Generatorwirkungsgrad muß der Verbrennungsmotor eine größere Leistung als bei höherem Generatorleistungsgrad abgeben, damit der Generator in jedem Fall die gewünschte (konstante) Ausgangsleistung abgibt. Als Folge hiervon bleibt, wenn als Randbedingung die abgegebene Gesamtleistung konstant gehalten wird, der Betriebspunkt des Verbrennungsmotors im Laufe einer Drehzahlvariation nicht streng auf einer Hyperbel konstanter Leistung, und auch die Gewichte $l_A$ und $l_E$ variieren mit der Drehzahl. Die Auswirkungen dieser zusätzlichen Drehzahlabhängigkeiten auf die Lage des Gesamtwirkungsgrad-Optimums sind jedoch relativ klein. Sie können daher vernachlässigt werden oder z.B. durch (etwa experimentell ermittelte) Korrekturfunktionen näherungsweise berücksichtigt werden. Es besteht auch die Möglichkeit, sich dem Gesamtwirkungsgrad-Optimum iterativ anzunähern (z.B. mit Hilfe einer Regelung).

v) Die vorliegende Darstellung bezieht sich zur Vereinfachung auf statischen Betrieb (d.h. auf Zustände konstanter Gesamt- und Generatorleistung); eine Optimierung des Gesamtwirkungsgrads im vorliegenden Sinn ist auch bei Zustandsänderungen, d.h. bei dynamischem Betrieb vorteilhaft.

FIG. 5 zeigt schließlich ein Beispiel, wie das Verfahren zur Optimierung des Gesamtwirkungsgrads bei einem Antriebssystem gemäß FIG. 1 abläuft. So ermittelt zunächst im Schritt S1 das Steuergerät 11 mit Hilfe der Drehzahlmeßeinrichtung 12 die momentane Drehzahl $n_m$. Im folgenden Schritt S2 ermittelt es anhand von Motorbetriebsdaten (z.B. Drosselklappeneinstellung, Kraftstoffeinspritzmenge) sowie der zuvor ermittelten Drehzahl die momentan vom Verbrennungsmotor 1 abgegebene Leistung $L_V$. Im Schritt S3 ermittelt es dann anhand elektrischer Kenndaten des Wechselrichters 8 (z.B. Strom und Spannung auf der Gleichstromseite des Wechselrichters) die momentane Leistung $L_G$ des Generators 5. Im Schritt S4 ermittelt das Steuergerät 11 anhand von gespeicherten Kennfelddaten den Verbrennungsmotorwirkungsgrad $\eta_V$ als Funktion der Drehzahl n bei der momentanen Verbrennungsmotorleistung $L_V$. Entsprechend ermittelt es im Schritt S5, wiederum aus gespeicherten Kennfelddaten, den Generatorwirkungsgrad $\eta_G$ als Funktion der Drehzahl n bei der momentanen Generatorleistung $L_G$. Im Schritt S6 errechnet es näherungsweise aus den Leistungen $L_V$ und $L_G$, wie sich die Leistung des Verbrennungsmotors im Fahrzeugbetrieb und Stromerzeugung aufteilt, und setzt entsprechend die Leistungs- bzw. Wirkungsgradgewichte $l_A$ und $l_E$. Im Schritt S7 gewinnt es aus den Leistungsgewichten $l_A$ und $l_E$ und den Einzelwirkungsgraden $\eta_V$, $\eta_G$ den Gesamtwirkungsgrad $\eta_T$ als Funktion der Drehzahl n. Im Schritt S8 ermittelt es diejenige Drehzahl $n_O$, bei welcher der Gesamtwirkungsgrad $\eta_T$ maximal ist. Falls diese Drehzahl von der im Schritt S1 ermittelten Ist-Drehzahl $n_m$ abweicht, veranlaßt es im Schritt S9 eine geeignete Verstellung der Übersetzung des CVT-Getriebes 3 derart, daß die Ist-Drehzahl den für den Gesamtwirkungsgrad optimalen Wert $n_O$ annimmt. Durch geeignete Änderung von Steuereinrichtungen des Verbrennungsmotors 1 (z.B. Drosselklappe und/oder Kraftstoffeinspritzmenge und/oder Zündzeitpunkt) erreicht das Steuergerät 11, daß trotz der Drehzahländerung die Motorleistung $L_V$ im wesentlichen konstant bleibt. Entsprechend veranlaßt es durch eine Veränderung der elektrischen Betriebsparameter des Generators 5 (z.B. der Amplituden und/oder Phasen der Spannungen/Ströme), daß dieser trotz der geänderten Drehzahl im wesentlichen unverändert die Leistung $L_G$ abgibt. Die Schritte S1 bis S9 werden ununterbrochen hintereinander durchlaufen, um dem Antriebssystem bei Drehzahl- oder Leistungsänderungen ein unverzügliches Einstellen auf die geänderte Situation zu erlauben. Selbstverständlich können bei ungeändert gebliebenen Leistungs- und Drehzahlwerten einzelne oder alle der Schritte S4 bis S8 übersprungen werden, da die Ergebnisse gegenüber den vorhergehenden Durchläufen keiner Änderung bedürfen. Ferner kann die angegebene Reihenfolge der Schritte S1 bis S9 abgewandelt werden, z.B. können die Leistungsgewichte unmittelbar nach dem Schritt S3 ermittelt werden, oder können die Einzelwirkungsgrade in den Schritten S4 und S5 jeweils direkt nach dem Ermitteln der entsprechenden Leistung (in den Schritten S2 und S3) ermittelt werden.

**Patentansprüche**

1.  Antriebssystem für ein Kraftfahrzeug, mit:

    -   einem als Antriebsaggregat dienenden Verbrennungsmotor (1);
    -   einem Getriebe (3) mit stufenlos oder feinabgestuft veränderbarer Übersetzung zwischen Antriebsaggregat (1) und Antriebsrädern (4) des Kraftfahrzeugs;

- wenigstens einem, vom Antriebsaggregat angetriebenen Nebenaggregat (5), insbesondere einem elektrischen Generator;
- einer Steuerung (11), welche den Gesamtwirkungsgrad des Antriebssystems durch Wahl eines Übersetzungswerts innerhalb eines Spielraums möglicher Ubersetzungswerte optimiert,

**dadurch gekennzeichnet, daß**

- die Optimierung so erfolgt, daß unter gemeinsamer Berücksichtigung der Wirkungsgrade des Antriebsstrangs des Fahrzeugs samt Antriebsaggregat und des Nebenaggregats oder der Nebenaggregate (5) samt Antriebsaggregat, zumindest als Funktion deren Drehzahl, ein möglichst großer Gesamtwirkungsgrad erzielt wird,
- wobei die Steuerung die Wirkungsgrade mit einem Gewicht entsprechend dem Leistungsanteil des Antriebsstrangs bzw. des wenigstens einen Nebenaggregats (5) an der vom Antriebsaggregat abgegebenen Gesamtleistung in die Optimierung des Gesamtwirkungsgrads einbezieht.

2. Antriebssystem nach Anspruch 1, bei welchem zwischen dem Antriebsaggregat (1) und dem wenigstens einen Nebenaggregat (5) wenigstens während der Wirkungsgrad-Optimierung ein festes Drehzahlverhältnis herrscht.

3. Antriebssystem nach Anspruch 2, bei welchem das feste Drehzahlverhältnis den Wert eins hat.

4. Antriebssystem nach einem der Ansprüche 1 bis 3, bei welchem die Wirkungsgrade als Produkt der Wirkungsgrade der in Serie geschalteten Elemente, also derjenigen von Antriebsaggregat (1) und Antriebsstrang (3, 4) bzw. Antriebsaggregat (1) und Nebenaggregat (5) bestimmt werden.

5. Antriebssystem nach einem der Ansprüche 1 bis 4, bei welchem die Relativgewichte der Wirkungsgrade entsprechend den mittleren Relativleistungen für Antriebsstrang und Nebenaggregat bzw. Nebenaggregate (5) fest gewählt sind.

6. Antriebssystem nach einem der Ansprüche 1 bis 4, bei welchem die Relativgewichte der Wirkungsgrade in Abhängigkeit von den momentanen Relativleistungen für Antriebsstrang und Nebenaggregat bzw. Nebenaggregate (5) variabel gewählt werden.

7. Antriebssystem nach Anspruch 1, bei welchem das Drehzahlverhältnis zwischen dem Antriebsaggregat (1) und dem wenigstens einen Nebenaggregat (5) veränderbar, insbesondere stufenlos oder feinabgestuft veränderbarer ist, und die Steuerung (11) auch dieses Drehzahlverhältnis innerhalb eines Spielraums möglicher Verhältniswerte wählt, und zwar so, daß möglichst große einzelne wirkungsgrade, und damit ein möglichst großer Gesamtwirkungsgrad erzielt werden.

8. Antriebssystem nach einem der Ansprüche 1 bis 7, bei welchem eine sich beim Optimieren des Gesamtwirkungsgrads ergebende Änderung der Gesamtleistung durch iteratives Annähern an den optimalen Gesamtwirkungsgrad und die gewünschte Gesamtleistung berücksichtigt wird.

9. Verfahren zum Betreiben eines Antriebssystems für ein Kraftfahrzeug mit einem Verbrennungsmotor (1), einem Getriebe (3) mit stufenlos oder feinabgestuft veränderbarer Übersetzung zwischen Verbrennungsmotor (1) und Antriebsrädern (4) des Kraftfahrzeugs, wenigstens einem, vom Verbrennungsmotor (1) angetriebenen Nebenaggregat (5), insbesondere einem elektrischen Generator; wobei der Gesamtwirkungsgrad des Antriebssystem durch Wahl eines Übersetzungswerts innerhalb eines Spielraums möglicher Übersetzungswerte optimiert wird,
**dadurch gekennzeichnet, daß**
die Optimierung so erfolgt, daß unter gemeinsamer Berücksichtigung der Wirkungsgrade des Antriebsstrangs des Fahrzeugs samt Antriebsaggregat und des Nebenaggregats oder der Nebenaggregate (5) samt Antriebsaggregat, zumindest als Funktion der Drehzahl, ein möglichst großer Gesamtwirkungsgrad erzielt wird, wobei die Wirkungsgrade mit einem Gewicht entsprechend dem Leistungsanteil des Antriebsstrangs bzw. des wenigstens einen Nebenaggregats (5) an der vom Antriebsaggregat abgegebenen Gesamtleistung in die Optimierung des Gesamtwirkungsgrads einbezogen werden.

**Claims**

1. A drive system for a motor vehicle, having:

- an internal combustion engine (1) serving as the drive unit;
- a transmission (3) having a transmission ratio which can be varied continuously or in fine graduations between drive unit (1) and drive wheels (4) of the motor vehicle;
- at least one additional unit (5) driven by the drive unit, especially an electrical generator;
- a control (11), which optimises the overall efficiency of the drive system by selecting a transmission value within a range of possible transmission values,

**characterised in that**

- the optimisation takes place so that the greatest possible overall efficiency is achieved by the joint consideration of the efficiency of the drive train of the vehicle together with drive unit and of the additional unit or additional units (5) together with drive unit, at least as a function of its speed,
- with the control incorporating the efficiencies in the optimisation of the overall efficiency with a weight corresponding to the power fraction of the drive train and of the at least one additional unit (5) in the total power given off by the drive unit.

2. A drive system according to Claim 1, in which a fixed speed ratio prevails, at least during efficiency optimization, between the drive unit (1) and the at least one additional unit (5).

3. A drive system according to Claim 2, in which the fixed speed ratio has the value one.

4. A drive system according to one of Claims 1 to 3, in which the efficiencies are determined as a product of the efficiencies of the elements connected in series, i.e. those of drive unit (1) and drive train (3, 4) and respectively drive unit engine (1) and additional unit (5).

5. A drive system according to one of Claims 1 to 4, in which the relative weights of the efficiencies are permanently chosen corresponding to the average relative powers for the drive train and additional unit or additional units (5).

6. A drive system according to one of Claims 1 to 4, in which the relative weights of the efficiencies are variably chosen as a function of the instantaneous relative powers for drive train and additional unit or additional units (5).

7. A drive system according to Claim 1, in which the speed ratio between the drive unit (1) and the at least one additional unit (5) is variable, in particularly continuously or in fine graduations, and the control (11) also selects this speed ratio within a range of possible ratio values, more precisely so that the highest possible individual efficiencies and, thus the highest possible overall efficiency, are achieved.

8. A drive system according to one of Claims 1 to 7, in which a change in total power produced during the optimization of the overall efficiency is considered by iterative approximation to the optimal overall efficiency and the desired total power.

9. A method for the operation of a drive system for a motor vehicle having an internal combustion engine (1), a transmission (3) having a transmission ratio which can be varied continuously or in fine graduations between internal combustion engine (1) and drive wheels (4) of the motor vehicle, at least one additional unit (5) driven by internal combustion engine (1), especially an electric generator; with the overall efficiency of the drive system being optimised by selecting a transmission value within a range of possible transmission values, **characterised in that** the optimisation takes place so that the greatest possible overall efficiency is achieved by the joint consideration of the efficiencies of the drive train of the vehicle together with drive unit and of the additional unit or additional units (5) together with drive unit, at least as a function of the speed, with the efficiencies being incorporated into the optimisation of the overall efficiency with a weight corresponding to the power fraction of the drive train or of the at least one additional unit (5) in the overall power given off by the drive unit.

## Revendications

1. Système d'entraînement pour un véhicule automobile, comportant :

   - un moteur, à combustion (1) servant de groupe d'entraînement ;
   - une boîte de vitesses (3) ayant un rapport de transmission continu progressif ou pouvant être modifiée de façon finement étagée, entre le groupe d'entraînement (1) et les roues d'entraînement (4) du véhicule automobile ;
   - au moins un groupe annexe (5) entraîné par le groupe d'entraînement, en particulier un générateur électrique ;
   - une commande (11) optimisant le rendement global du système d'entraînement par la sélection d'une valeur de rapport de transmission dans les limites d'une plage de valeurs possible de rapport de transmission,

   **caractérisé en ce que**

   - l'optimisation s'effectue de manière que, en prenant en considération conjointement le rendement du train d'entraînement du véhicule avec le groupe d'entraînement et le groupe annexe, ou le groupe annexe (5) avec le groupe d'entraînement, au moins en tant que fonction de sa vitesse de rotation, on puisse obtenir un rendement global aussi élevé que possible,
   - la commande impliquant dans l'optimisation du rendement global les rendements avec une pondération, de manière correspondante à la fraction de puissance du train d'entraînement ou du au moins un groupe annexe (5) participant à la puissance globale délivrée par le groupe d'entraînement.

2. Système d'entraînement selon la revendication 1, pour lequel un rapport fixe entre les vitesse de rotation règne, entre le groupe d'entraînement (1) et le au moins un groupe annexe (5), au moins pendant la phase d'optimisation du rendement.

3. Système d'entraînement selon la revendication 2, pour lequel le rapport fixe entre la vitesse de rotation est de valeur un.

4. Système d'entraînement selon l'une des revendications 1 à 3, dans lequel les rendements sont déterminés en tant que produit des rendements des éléments branchés en série, donc ceux venant du groupe d'entraînement (1) et du train d'entraînement (3, 4) ou du groupe d'entraînement (1) et du groupe annexe (5).

5. Système d'entraînement selon l'une des revendications 1 à 4, pour lequel les pondérations relatives des rendements sont choisies de façon fixe, de manière correspondante aux puissances relatives moyennes du train d'entraînement et du groupe annexe ou des groupes annexes (5).

6. Système d'entraînement selon l'une des revendications 1 à 4, pour lequel les pondérations relatives des rendements sont choisies de façon variable en fonction des puissances relatives momentanées du train d'entraînement et du groupe annexe ou des groupes annexes (5).

7. Système d'entraînement selon la revendication 1, pour lequel le rapport des vitesse sde rotation entre le groupe d'entraînement (1) et le au moins un groupe annexe (5) est modifiable, en particulier est modifiable de façon progressive continue ou finement étagée, et la commande (11) choisit également ce rapport entre la vitesse de rotation, dans les limites d'une plage de valeurs possible du rapport et, précisément, de manière que l'on obtienne des rendements individuels aussi grands que possible et, ainsi, un rendement global aussi grand que possible.

8. Système d'entraînement selon l'une des revendications 1 à 7, pour lequel une modification, résultante lors de l'optimisation du rendement global, de la puissance globale est prise en compte par une approche itérative du rendement global optimal et de la puissance globale souhaitée.

9. Procédé de fonctionnement d'un système d'entraînement pour un véhicule automobile équipé d'un moteur à combustion interne (1), d'une boîte de vitesses (3) à rapport de transmission modifiable de façon progressive continue ou bien finement étagée, entre le moteur à combustion (1) et les roues d'entraînement (4) du véhicule automobile, au moins un groupe annexe (5) entraîné par le moteur à combustion (1), en particulier un générateur électrique ; le rendement global du système d'entraînement étant optimisé par le choix d'une valeur de rapport de transmission dans les limites d'une plage de valeurs possible de rapport de transmission, **caractérisé en ce que**

l'optimisation s'effectue de manière que, en prenant en considération conjointement les rendements du train d'entraînement du véhicule avec le groupe d'entraînement et le groupe annexe, ou bien des groupes annexes (5) avec le groupe d'entraînement, on obtienne, au moins en tant que fonction de la vitesse de rotation, une valeur aussi élevée que possible du rendement global, les rendements étant impliqués dans l'optimisation du rendement global avec une pondération correspondante à la proportion de puissance du train d'entraînement, ou du au moins un groupe annexe (5), à la puissance globale fournie par le groupe d'entraînement.

Fig.1

## Fig. 2

Optimum Verbr.-Motor | Gesamt-optimum | globales Optimum

relativer effektiver Mitteldruck

100% — 80% — 60% — 40% — 20%

33% 32% 31% 30% 29% 28% 26% 24% 22% 20% 16% 13%

höhere Leistung
niedrigere Leistung

1000  2000  3000  4000  min⁻¹  6000

Drehzahl

## Fig. 4

33% — 27% — 20% — 13% — 7%

Wirkungsgrad

$\eta\,V\,max$

$\eta\,ges\,max$

$\eta\,G(n)\times 3$

$\eta\,V(n)$

$\eta\,ges(n)$

$\eta\,V(n)\cdot\eta\,G(n)$

1000  2000  3000  4000  min⁻¹  6000

Drehzahl

# Fig. 3

S1 — Ermitteln der momentanen Drehzahl $n_m$

S2 — Ermitteln der Verbrennungsmotor-Leistung $L_V$

S3 — Ermitteln der Generator-Leistung $L_G$

S4 — Ermitteln des Verbrennungsmotorwirkungsgrads $\eta_V$ als Funktion der Drehzahl n bei der Leistung $L_V$

S5 — Ermitteln des Generatorwirkungsgrads $\eta_G$ als Funktion der Drehzahl n bei der Leistung $L_G$

S6 — Ermitteln der Leistungsgewichte $l_V$ und $l_G$ aus den Leistungen $L_V$ und $L_G$

S7 — Ermitteln der Gesamtwirkungsgradfunktion $\eta_T(n)$ aus den Leistungsgewichten $l_V$, $l_G$ und den Einzelwirkungsgrade $\eta_V$, $\eta_G$

S8 — Ermitteln der Drehzahl $n_O$ mit maximalem Gesamtwirkungsgrad $\eta_T$

S9 — Falls die Drehzahl $n_O$ von der Ist-Drehzahl $n_m$ abweicht, Veranlassen einer geeigneten Verstellung der Übersetzung des CVT-Getriebes, so daß die Abweichung verschwindet.

Fig. 5

14